# EUROPÄISCHE PATENTSCHRIFT

(11) **EP 0 783 386 B1**
(45) Veröffentlichungstag und Bekanntmachung des Hinweises auf die Patenterteilung: **05.01.2000**
(21) Anmeldenummer: 96927583.3
(22) Anmeldetag: 23.07.1996
(51) Int. Cl.: B21D 51/38

(54) **VERFAHREN ZUR HERSTELLUNG EINES KONSERVENBEHÄLTERS**
METHOD OF MANUFACTURING A CONTAINER FOR PRESERVES
PROCEDE DE FABRICATION DE RECIPIENTS POUR CONSERVES

(30) Priorität: 26.07.1995 DE 19527291
(43) Veröffentlichungstag der Anmeldung: 16.07.1997
(73) Patentinhaber: VAW Aluminium AG, D-53117 Bonn (DE)
(72) Erfinder: BREUER, Manfred, D-50129 Bergheim (DE); HOCKS, Klaus, D-41515 Grevenbroich (DE)
(74) Vertreter: Müller-Wolff, Thomas, Dipl.-Ing.
(86) Internationale Anmeldenummer: EP9603244
(87) Internationale Veröffentlichungsnummer: WO9704896

(56) Entgegenhaltungen:
- EP-A- 0 408 268
- DE-A- 4 332 306
- GB-A- 1 053 677
- GB-A- 2 022 474
- US-A- 2 157 978

## Beschreibung

Die Erfindung betrifft ein Verfahren zur Herstellung eines Konservenbehälters wie im Oberbegriff des Anspruchs 1 angegeben.

Bei einem aus der DE 33 44 441 bekannten Verfahren werden der Behälterkörper und der Deckel durch den Aufsiegelvorgang dichtend miteinander verbunden, indem die Siegelbeschichtung mittels eines Siegelwerkzeuges unter Einwirkung von Druck und/oder Wärme aufgesiegelt wird. Der Aufsiegelvorgang erfolgt dabei nach dem Befüllen des Behälterkörpers mit dem zu konservierenden Material. Bei diesem Befüllvorgang kann jedoch nicht ausgeschlossen werden, daß Anteile des zu konservierenden Materials auf den ebenen Randflansch des Behälterkörpers gelangen, wodurch die Siegelschicht unterbrochen wird und beim anschließenden Siegelvorgang Dichtigkeitsprobleme auftreten können.

Daher ist aus der Praxis ein Verfahren zur Herstellung eines Konservenbehälters bekannt, bei dem zusätzlich zum Behälterkörper eine Siegeizwischenlage hergestellt wird (sog. "Siegelring"), welche ihrerseits mit dem Deckel bzw. der Deckelfolie stoffschlüssig verbunden wird und nach dem Befüllen des Konservenbehälters auf den Randflansch des Behälterkörpers aufgelegt wird. Ein Nachteil dieses Verfahrens besteht jedoch darin, daß Behälterkörper und Siegelzwischenlage, die in der Regel als Siegelring gestaltet ist, getrennt voneinander erstellt werden müssen. Bei der Herstellung des Siegelringes fällt dabei ein hoher fertigungsbedingter Verschnitt an, da nur die später auf dem Randflansch aufzuliegende Fläche benötigt wird, während innerhalb des Ringbereichs und zum Nachbarring hin ungenutzte Flächenbereiche des Flachmaterials verbleiben.

Ein anderes Verfahren ist aus der DE-OS 15 86 288 nächstliegender Stand der Technik bekannt. Hierbei wird eine zusätzlich eingelegte Siegelzwischenlage verwendet, die aus einem Thermoplast besteht.

Aus der EP-A-0 408 268 ist ein Verfahren zur Herstellung eines Konservenbehälters bekannt, bei dem ein Siegelring mit einer umgebördelten Innenkante hergestellt wird. Auf die Bördelkante wird der Deckel oder ein Diaphragma aufgesiegelt, wobei der Deckel oder das Diaphragma aus einem Verbundmaterial aus Metall und einem Polymerfilm besteht.

Der Erfindung liegt die Aufgabe zugrunde, ein Verfahren zur Herstellung eines Konservenbehälters hinsichtlich seiner Wirtschaftlichkeit zu verbessern.

Diese Aufgabe wird erfindungsgemäß durch die im Anspruch 1 angegebenen Merkmale gelöst.

Die Erfindung zeichnet sich dadurch aus, daß die Wirtschaftlichkeit erhöht wird, indem durch die gemeinsame Herstellung von Siegelzwischenlage und Behälterkörper der Materialverschnitt (Schrottanteil) erheblich reduziert wird, weil der gesamte gemeinsame Zuschnitt von Behälterkörper und Siegelzwischenlage materialmäßig verwendet werden kann. Durch die vergrößerte Gestaltung des Randbereichs können dort gemeinsam Randflansch und Siegelring ausgebildet werden. Nach der anschließenden Trennung von Siegelring einerseits und Randflanschbereich andererseits fällt innerhalb des Zuschnitts nunmehr kein Schrottanteil an. Die Wiederverbindung von Behälterkörper einerseits und mit dem Deckel versehener Siegelzwischenlage andererseits kann dann in einfacher Weise erfolgen, indem entweder der Behälterkörper zu seinem Randflansch hin aufgeweitet wird oder die Siegelzwischenlage hinsichtlich ihrer Abmessungen reduziert wird. Auch eine Kombination der beiden genannten Anpassungsvorgänge ist möglich.

Bevorzugt ist die Siegelzwischenlage als Siegelring ausgebildet, dessen Kontur der des Randflansches entspricht.

Die Aufweitung des tiefgezogenen Behälterkörpers kann sowohl konisch, beispielsweise um 3 bis 10%, erfolgen als auch stufenweise mit sich zum Randflansch hin erweiternden Querschnitt des Behälterkörpers.

Das Trennen der Siegelzwischenlage von Behälterkörper kann sowohl vor, zweckmäßigerweise aber nach dem Tiefziehen desselben erfolgen.

Wenn die Anpassung von Behälterkörper und Siegelzwischenlage durch Reduzierung der Abmessungen der Siegelzwischenlage erfolgt, beispielsweise dadurch, daß der Durchmesser einer als Siegelring ausgebildeten Siegelzwischenlage reduziert wird, kann dies in einfacher Weise durch Einzug des Außenrandes zum Innenrand hin auf den Durchmesser des Behälterkörpers erfolgen. Vorzugsweise wird dabei ein entsprechender Druck ausgeübt, so daß eine Faltenbildung vermieden werden kann.

Die Erfindung wird im folgenden anhand einer Zeichnung näher erläutert. Dabei zeigen:
- Fig. 1: eine Skizze zur Erläuterung des Herstellungsverfahrens eines Konservenkörpers mit beim Aufsiegelvorgang zusätzlich eingelegter Siegelzwischenlage, wie es aus der Praxis bekannt ist,
- Fig. 2 a) bis d): Herstellungsverfahrensschritte gemäß einem Ausführungsbeispiel der Erfindung,
- Fig. 3: Ein Skizze zur Erläuterung der Reduzierung des Durchmessers einer als Siegelring ausgebildeten Siegelzwischenlage.

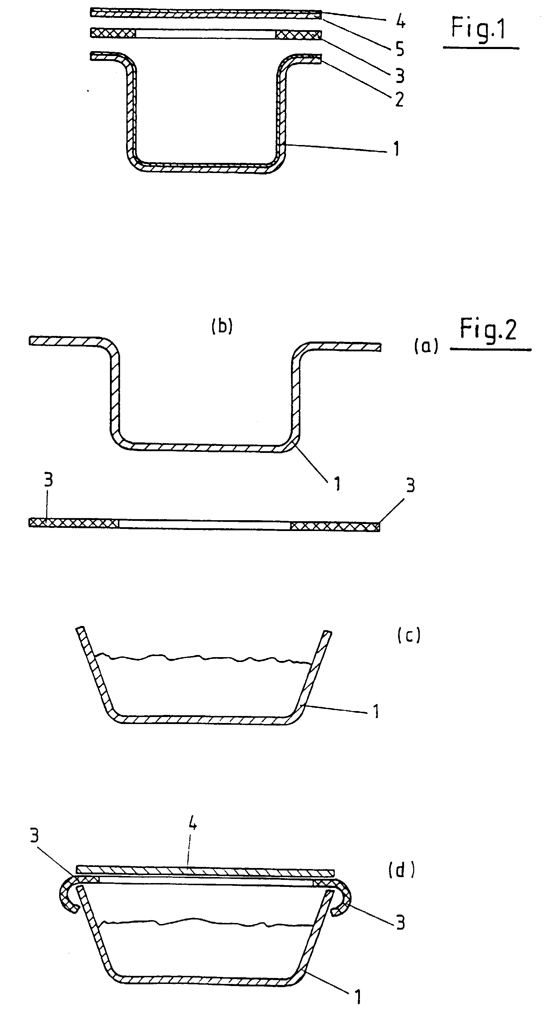

Bei dem in Fig. 1 dargestellten aus der Praxis bekannten Verfahren zur Herstellung eines Konservenkörpers mit beim Aufsiegelvorgang zusätzlich eingelegter Siegelzwischenlage wird zunächst der Behälterkörper 1 aus Flachmaterial, insbesondere Aluminiumband, zu dem dargestellten Profil tiefgezogen. Dabei ist der Behälterkörper 1 mit einer Siegelbeschichtung 2 versehen.

Getrennt vom Behälterkörper 1 wird ein als Siegelzwischenlage dienender Siegelring 3 aus Flachmaterial ausgestanzt. Den Oberteil des so ausgebildeten Konservenkörpers bildet eine Deckelfolie 4, an deren Unterseite eine weitere Siegelbeschichtung 5 vorgesehen ist. Siegelring 3 und Deckelfolie 4 werden stoffschlüssig, z.B. durch Heißsiegelung oder Verkleben, miteinander verbunden. Die Verbindung von Behälterkörper 1 einerseits, Siegelring 3 bzw. Deckelfolie 4 andererseits erfolgt nach dem Befüllen durch einen üblichen Aufsiegelvorgang unter Einwirkung von Druck und/oder Wärme, gegebenen falls ergänzend dazu durch Umbördeln von Siegelring 3 und Behälterkörper 1 in seinem Randflanschbereich.

Gemäß dem in Fig. 2 dargestellten Verfahren entsprechend der vorliegenden Erfindung wird zunächst in einem zeichnerisch nicht dargestellten Schritt ein Zuschnitt aus einem Flachmaterial, insbesondere Aluminiumband, ausgestanzt, welcher so gestaltet ist, daß er einerseits den Behälterkörper als auch andererseits die benötigte Fläche für den Siegelring umfaßt. Anschließend wird, wie in Fig. 2a) dargestellt, der Behälterkörper 1 tiefgezogen und der verbleibende Materialanteil zu einem ebenen Bereich abgewinkelt.

Anschließend erfolgt im Randbereich zwischen ebenem und tiefgezogenem Teil ein Schneidevorgang entlang der in Fig. 2b) dargestellten strichpunktierten Linien. Hierdurch wird der spätere Siegelring vom verbleibenden Behälterkörper getrennt.

Anschließend wird der Behälterkörper 1, wie in Fig. 2c) dargestellt ist, soweit auseinandergezogen, daß sich ein konisch nach oben hin erweiternder Querschnitt ergibt.

Danach wird das zu konservierende Material in den Behälterkörper 1 eingefüllt.

Beim nächsten Schritt (Fig. 2d)) wird dann der mit der Deckelfolie 4 versehene Siegelring 3 wieder auf den abgeflachten Randflanschbereich des Behälterkörpers 1 aufgelegt. Anschließend werden Siegelring bzw. Deckelfolie 4 durch Umbördeln des Randflanschbereichs des Behälterkörpers 1 fest mit dem Behälterkörper verbunden.

Alternativ oder ergänzend zu der in Fig. 2c) dargestellten konischen Erweiterung des Behälterkörpers 1 kann auch eine stufenweise Vergrößerung des Behälterkörpers 1 zum Randflanschbereich hin möglich sein.

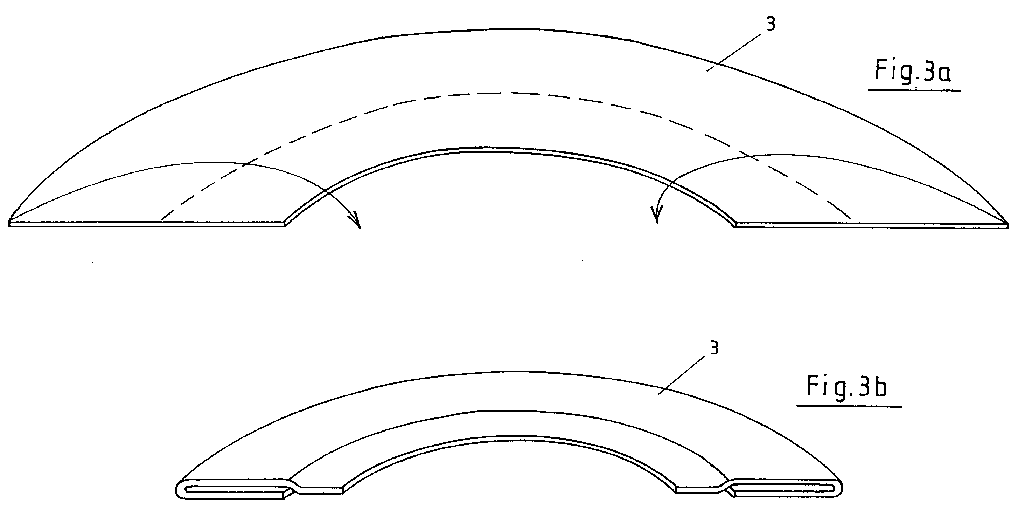

Anstelle des oben in den Verfahrensschritten nach Fig. 2c) und 2d) erläuterten Herstellungsvorganges kann die Verbindung zwischen Siegelring 3 und Behälterkörper 1 auch dadurch erfolgen, indem der Siegelring 3 hinsichtlich seines Durchmessers derart reduziert wird, daß der Siegelring 3 an den Randflanschlbereich des Behälterkörpers 1 angepaßt wird. Dies erfolgt, wie in Fig. 3a) bzw. 3b) dargestellt ist dadurch, daß der in Fig. 3a) auszugsweise dargestellte Siegelring 3 entlang der strichlinierten Linie teilweise überlappend umgelegt wird, indem der Außenrand des Siegelringes 3 in Pfeilrichtung zum Innenrand hin eingezogen wird. Dadurch ergibt sich die in Fig. 3b) dargestellte Gestaltung, in der der Innenring einen gegenüber der Darstellung in Fig. 3a) reduzierten Innendurchmesser aufweist. Zur Vermeidung von Faltenbildung erfolgt nach dem Einziehen des Außenrandes zum Innenrand eine Druckeinwirkung.

## Patentansprüche

1. Verfahren zur Herstellung eines Konservenbehälters, wobei
a) der Behälterkörper (1) aus Flachmaterial, insbesondere Aluminiumband oder Weißblechband, tiefgezogen wird,
b) mindestens im Bereich seines ebenen Randflansches mit einer Beschichtung (2), insbesondere einer Siegelbeschichtung versehen wird,
c) auf den Randflanach des Behälterkörpers (1) eine Siegelzwischenlage aufgelegt,
d) ein mit einer weiteren Beschichtung (5), insbesondere einer weiteren Siegelbeschichtung versehener Deckel (4) aus einem Folienwerkstoff, insbesondere Aluminiumfolie hergestellt und dieser
e) unter Einwirkung von Druck und/oder Wärme aufgesiegelt wird,
dadurch gekennzeichnet,
daß
f) zunächst der Zuschnitt für Behälterkörper (1) und Siegelzwischenlage (3) gemeinsam aus dem Flachmaterial ausgestanzt wird,
g) die Siegelzwischenlage (3) entweder vor oder nach Durchführung von a) im Bereich des Randflansches vom Behälterkörper (1) getrennt,
h) und dann vor Durchführung von d) die Siegelzwischenlage (3) nach Aufweitung des tiefgezogenen Behälterkörpers zu seinem Randflansch hin und/oder nach Reduzierung der Abmessungen der Siegelzwischenlage auf den Randflansch aufgelegt wird.

2. Verfahren nach Anspruch 1,
dadurch gekennzeichnet,
daß die Siegelzwischenlage (3) ein Siegelring ist.

3. Verfahren nach einem der vorhergehenden Ansprüche,
dadurch gekennzeichnet,
daß die Aufweitung des tiefgezogenen Behälterkörpers konisch erfolgt.

4. Verfahren nach einem der Ansprüche 1 oder 2,
dadurch gekennzeichnet,
daß die Aufweitung des tiefgezogenen Behälterkörpers sich stufenweise zum Randflansch hin erweiternd erfolgt.

5. Verfahren nach Anspruch 1,
dadurch gekennzeichnet,
daß die Siegelzwischenlage (3) nach dem Tiefziehen des Behälterkörpers (1) abgetrennt wird.

6. Verfahren nach einem der vorhergehenden Ansprüche,
dadurch gekennzeichnet,
daß die Siegelzwischenlage (3) mit dem Deckel (4), insbesondere der Deckelfolie, stoffschlüssig verbunden wird und anschließend das Auflegen auf den Randflansch erfolgt.

7. Verfahren nach Anspruch 1 oder 2,
dadurch gekennzeichnet,
daß die Reduzierung der Abmessungen der Siegeizwischenlage, insbesondere die Reduzierung des Durchmessers des Siegelringes, durch Einzug des Außenrandes zum Innenrand erfolgt.

8. Verfahren nach Anspruch 7,
dadurch gekennzeichnet,
daß der Einzug des Außenrandes zum Innenrand unter Druckeinwirkung erfolgt.

## Claims

1. A method of producing a canned food container wherein
a) the container body (1) is deep-drawn from a flat material, especially aluminium strip or tinplate strip,
b) the container body (1), at least in the region of its planar edge flange, is provided with a coating (2), especially a sealing coating,
c) an intermediate sealing layer is placed on to the edge flange of the container body (1),
d) a cover (4) provided with a further coating (5), especially a further sealing coating, is produced from a foil material, especially aluminium foil, and
e) the cover (4) is sealed on under the influence of pressure and/or heat,
characterised in
that
f) the piece of material required for the container body (1) and the intermediate sealing layer (3) are jointly punched out of the flat material,
g) the intermediate sealing layer (3) is separated from the container body (1) in the region of the edge flange either before or after step a) has been carried out,
h) and that then, prior to carrying out step d), the intermediate sealing layer (3) is placed on to the edge flange after the deep-drawn container body has been widened towards its edge flange and/or after the dimensions of the intermediate sealing layer have been reduced.

2. A method according to claim 1,
characterised in
that the intermediate sealing layer (3) is a sealing ring.

3. A method according to any one of the preceding claims,
characterised in
that the deep-drawn container body is widened conically.

4. A method according to any one of claims 1 or 2,
characterised in
that the deep-drawn container body is widened stepwise towards the edge flange.

5. A method according to claim 1,
characterised in
that the intermediate sealing layer (3) is separated after the container body (1) has been deep-drawn.

6. A method according to any one of the preceding claims,
characterised in
that the intermediate sealing layer (3) is connected to the cover (4), especially to the cover foil, in a material-locking way and subsequently, placed on to the edge flange.

7. A method according to claim 1 or 2,
characterised in
that the dimensions of the intermediate sealing layer, especially the diameter of the sealing ring, are reduced by drawing the outer edge towards the inner edge.

8. A method according to claim 7,
characterised in
that the operation of drawing in the outer edge towards the inner edge takes place under the influence of pressure.

## Revendications

1. Procédé pour fabriquer un récipient pour conserve, selon lequel
a) on forme le corps (1) du récipient par emboutissage d'un matériau plat, notamment d'une bande d'aluminium ou d'une bande de fer-blanc,
b) on applique à ce corps au moins dans la zone de sa bride marginale plane, un revêtement (2), notamment un revêtement de scellement,
c) on applique une couche intermédiaire de scellement sur la bride marginale du corps (1) du récipient,
d) on fabrique un couvercle (4) pourvu d'un autre revêtement (5), notamment d'un autre revêtement de scellement, et formé d'un matériau en forme de feuille, notamment d'une feuille d'aluminium, et
e) on scelle ce couvercle moyennant l'application d'une pression et/ou d'une chaleur,
caractérisé en ce que
f) on découpe tout d'abord le flan pour le corps (1) du récipient et la couche intermédiaire de scellement (3) en commun à partir du matériau plat,
g) on sépare la couche intermédiaire de scellement (3) du corps (1) du récipient soit avant, soit après l'exécution de a), au niveau de la bride marginale, et
h) avant l'exécution de d), on applique la couche intermédiaire de scellement (3) sur la bride marginale après élargissement du corps embouti du récipient en direction de sa bride marginale et/ou après réduction des dimensions de la couche intermédiaire de scellement.

2. Procédé selon la revendication 1,
caractérisé en ce
que la couche intermédiaire de scellement (3) est une bague de scellement.

3. Procédé selon l'une des revendications précédentes,
caractérisé en ce
que l'élargissement du corps embouti du récipient est réalisé avec une forme conique.

4. Procédé selon l'une des revendications 1 ou 2,
caractérisé en ce
que l'élargissement du corps embouti du récipient s'effectue d'une manière étagée en direction de la bride marginale.

5. Procédé selon la revendication 1,
caractérisé en ce
qu'on sépare la couche intermédiaire de scellement (3) après emboutissage du corps (1) du récipient.

6. Procédé selon l'une des revendications précédentes,
caractérisé en ce
qu'on relie la couche intermédiaire de scellement (3) au couvercle (4), notamment à la feuille de couvercle, selon une liaison par matériaux compatibles et qu'on l'applique ensuite sur la bride marginale.

7. Procédé selon la revendication 1 ou 2,
caractérisé en ce
que la réduction des dimensions de la couche intermédiaire de scellement, notamment la réduction du diamètre de la bague de scellement, s'effectue par retrait du bord extérieur en direction du bord intérieur.

8. Procédé selon la revendication 7,
caractérisé en ce
que le retrait du bord extérieur en direction du bord intérieur s'effectue moyennant l'action d'une pression.
